# EUROPÄISCHE PATENTSCHRIFT

(11) **EP 0 865 956 B1**
(45) Veröffentlichungstag und Bekanntmachung des Hinweises auf die Patenterteilung: **19.06.2002**
(21) Anmeldenummer: 98104332.6
(22) Anmeldetag: 11.03.1998
(51) Int. Cl.: B60K 23/00

(54) **Fahrzeug mit je einem Pedal für Vorwärtsfahrt und Rückwärtsfahrt**
Vehicle with pedal for forward driving and pedal for rearward driving
Véhicule avec pédale pour marche avant et pédale pour marche arrière

(30) Priorität: 18.03.1997 US 820211
(43) Veröffentlichungstag der Anmeldung: 23.09.1998
(73) Patentinhaber: DEERE & COMPANY, Moline, Illinois 61265-8098 (US)
(72) Erfinder: Zellmer, Timothy Paul, Horicon, WI 53032 (US)
(74) Vertreter: Magin, Ludwig Bernhard

(56) Entgegenhaltungen:
- EP-A- 0 360 132
- EP-A- 0 430 600
- US-A- 5 231 891
- PATENT ABSTRACTS OF JAPAN vol. 014, no. 510 (M-1045), 8. November 1990 (1990-11-08) & JP 02 209671 A (KUBOTA LTD), 21. August 1990 (1990-08-21)

## Beschreibung

Die Erfindung bezieht sich auf ein Fahrzeug mit einem ersten Pedal für Vorwärtsfahrt und einem zweiten Pedal für Rückwärtsfahrt, wobei eines der Pedale auf einer Primärwelle fest angeordnet ist und wobei die Primärwelle einen radial abstehenden Steuerarm aufweist, der mit einer Getriebeschaltung in Verbindung steht, die bei einer Verstellung aus einer Ruhestellung in eine erste Richtung das Getriebe in eine Antriebsdrehrichtung für Vorwärtsfahrt und bei einer Verstellung aus der Ruhestellung in eine zweite Richtung das Getriebe in eine Antriebsdrehrichtung für Rückwärtsfahrt verstellt, wobei das andere Pedal auf einer zweiten zur Primärwelle mit Abstand angeordneten Welle fest angeordnet ist und beide Wellen in einer Tragkonsole vorgesehen sind, die an dem Fahrzeug an der Stelle oder in deren unmittelbarer Nähe angebracht ist, an der die Pedale betätigt werden.

Bei einem bekannten Fahrzeug (US-A-4 129 047) sind beide Pedale auf einer gemeinsamen Welle nebeneinander angeordnet, wobei das das als hydrostatisches Getriebe ausgebildete Fahrzeuggetriebe in seine Drehrichtung für Vorwärtsfahrt schaltende Pedal einen unterhalb der Welle liegenden Fortsatz und das das Fahrzeuggetriebe in seine Drehrichtung für Rückwärtsfahrt schaltende Pedal einen oberhalb der Welle liegenden Fortsatz aufweist, die beide über je eine Verbindungsstange mit dem Fahrzeuggetriebe verbunden sind. Die gemeinsame Welle ist im Rahmen des Fahrzeugs, das ein Rasentraktor sein kann, fest angeordnet und/oder in entsprechenden Rahmenteilen. Bei entsprechend gebauten Rasentraktoren ist die gemeinsame Welle einseitig eingespannt. Aber auch bei einer Aufhängung in entsprechenden Rahmenteilen sind viele metallische Befestigungsteile oder Lagerstücke erforderlich, damit die gemeinsame Welle die entsprechenden Kräfte aufnehmen kann. Hinzu kommt, dass die Pedalanordnung der Bedienungsperson ein sicheres Gefühl geben muss. Sie darf im Einsatz nicht vibrieren oder gar wackeln. Um dies sicher zu stellen, sind in der Regel viele relativ kostspielige Teile erforderlich.

Die US-A-5,231,891, die auch die Merkmale des Oberbegriffs des 1 Anspruchs beinhaltet, zeigt eine Geschwindigkeitswechseleinrichtung zur Steuerung eines Getriebes eines Arbeitsfahrzeugs mit einem ersten Pedal, das um eine Achse, die sich bezogen auf den Fahrzeugkörper quer erstreckt, schwenkbar angeordnet ist, und mit einem zweiten Pedal, das dem ersten Pedal angrenzend vorgesehen und um eine Achse schwenkbar ist, die sich bezogen auf den Fahrzeugkörper in Längsrichtung erstreckt. Das erste Pedal ist mit dem Getriebe derart verbunden, daß ein Herunterdrücken des Pedals das Fahrzeug in eine Vorwärtsrichtung beschleunigt. Das zweite Pedal weist einen Hebel auf, der sich unter das erste Pedal erstreckt. Wenn das zweite Pedal heruntergedrückt wird, hebt der Hebel das erste Pedal an, wodurch das Fahrzeug in eine Rückwärtsrichtung beschleunigt wird.

Die mit der Erfindung zu lösende Aufgabe wird daher in einer Pedalanordnung gesehen, die relativ einfach und damit auch kostengünstig herzustellen ist. Ein weiterer Aspekt wird darin gesehen, dass es nur relativ weniger Teile bedarf, die leicht und schnell montiert werden können, wobei aber das solide Gefühl nicht verloren gehen darf. Hierzu ist vorgesehen, dass das andere Pedal auf einer zweiten zur Primärwelle mit Abstand angeordneten Welle fest angeordnet ist und dass beide Wellen in einer Tragkonsole vorgesehen sind, die an dem Fahrzeug an der Stelle oder in deren unmittelbarer Nähe angebracht ist, an der die Pedale betätigt werden. Dabei kann die Tragkonsole an einer Fußaufstellfläche angebracht sein. In jedem Fall können somit die beiden Wellen relativ kurz gehalten werden, wobei die Tragkonsole für eine ausreichende Festigkeit sorgt. Um diese noch zu vergrößern, kann oder können nach einem weiteren Vorschlag der Erfindung die Primärwelle und/oder die zweite Welle an mindestens zwei mit Abstand zueinander angeordneten Stellen in der Tragkonsole gelagert sein. Da über die Primärwelle das Getriebe in seine Stellung für Rückwärtsfahrt umgeschaltet werden kann, ist nach der Erfindung femer vorgesehen, dass die Primärwelle mit einem Arm versehen ist, der über einen Hebel mit dem Pedal für Rückwärtsfahrt verbunden ist.

Im einzelnen ist das Pedal für Vorwärtsfahrt auf der Primärwelle und das Pedal für Rückwärtsfahrt auf der zweiten Welle fest angeordnet

Um ein Verschweißen der miteinander zu verbindenden Teile wenigstens weitgehend zu vermeiden, kann nach der Erfindung außerdem noch vorgesehen sein, dass die Primärwelle und/oder die zweite Welle zumindest an einer Stelle derartig geformt sind, dass sie auf sie aufsteckbare Teile drehfest aufnehmen. Im einzelnen wird dies dadurch erreicht, dass die miteinander zu verbindenden Teile entsprechend profiliert sind, d. h. zusammenpassende Flächen aufweisen. Hierzu bieten sich insbesondere solche Teile an, die nicht oder nur schwerlich vormontiert werden können, wie beispielsweise das Pedal für Rückwärtsfahrt.

Dadurch, dass der Hebel durch Anlage gegen die Tragkonsole in dem Pedal für Rückwärtsfahrt und dem Arm gehalten ist, wird es möglich, auf eine zusätzliche Sicherung durch Muttem oder Splinte zu verzichten, insbesondere dann, wenn der Hebel als U-förmiger Stangenteil ausgebildet ist.

Schließlich kann die Tragkonsole zur drehbaren Aufnahme der Primärwelle und der zweiten Welle noch mit Lagern versehen sein.

In der Zeichnung ist ein nachfolgend näher erläutertes Ausführungsbeispiel der Erfindung dargestellt. Es zeigt:
- Fig. 1: eine Pedalanordnung in einer Ansicht von oben für ein Pedal für Vorwärtsfahrt in seiner Betriebsstellung und ein Pedal für Rückwärtsfahrt;
- Fig. 2: die Pedalanordnung nach Fig. 1 in Seitenansicht;
- Fig. 3: die Pedalanordnung in Seitenansicht mit sich in der Neutralstellung befindlichen Pedalen;
- Fig. 4: eine ähnliche Darstellung wie in Fig. 2 jedoch mit sich in seiner Betriebsstellung befindlichem Pedal für Rückwärtsfahrt und
- Fig. 5: die Verbindung des Pedals für Rückwärtsfahrt mit der Primärwelle.

Rasenschlepper sind in der Regel kompakt gebaut und weisen eine gedrungene Bauweise auf, so dass für Pedalanordnungen usw. wenig Platz vorhanden ist. Für einen solchen Schlepper ist das aus der Zeichnung erkennbare Gestänge 10 hauptsächlich konzipiert. Im Arbeitseinsatz befindet sich die Bedienungsperson auf dem Sitz des nicht weiter dargestellten Schleppers mit ihrem Fuß auf einer Fußaufstellfläche 12, die gleichzeitig der Boden des Bedienungsstandes oder die Teil der Radabdekkung sein kann. Durch die Fußaufstellfläche 12 erstrecken sich zwei Pedale 14 und 16 derart nach oben, dass sie durch den Fuß der Bedienungsperson betätigt werden können. Durch Heruntertreten eins der Pedale wird ein Getriebe in eine Drehrichtung für Vorwärtsfahrt und durch Heruntertreten des anderen Pedals wird das Getriebe in eine Drehrichtung für Rückwärtsfahrt geschaltet. Durch ein weiteres Heruntertreten des entsprechenden Pedals kann noch die Fahrgeschwindigkeit vergrößert werden.

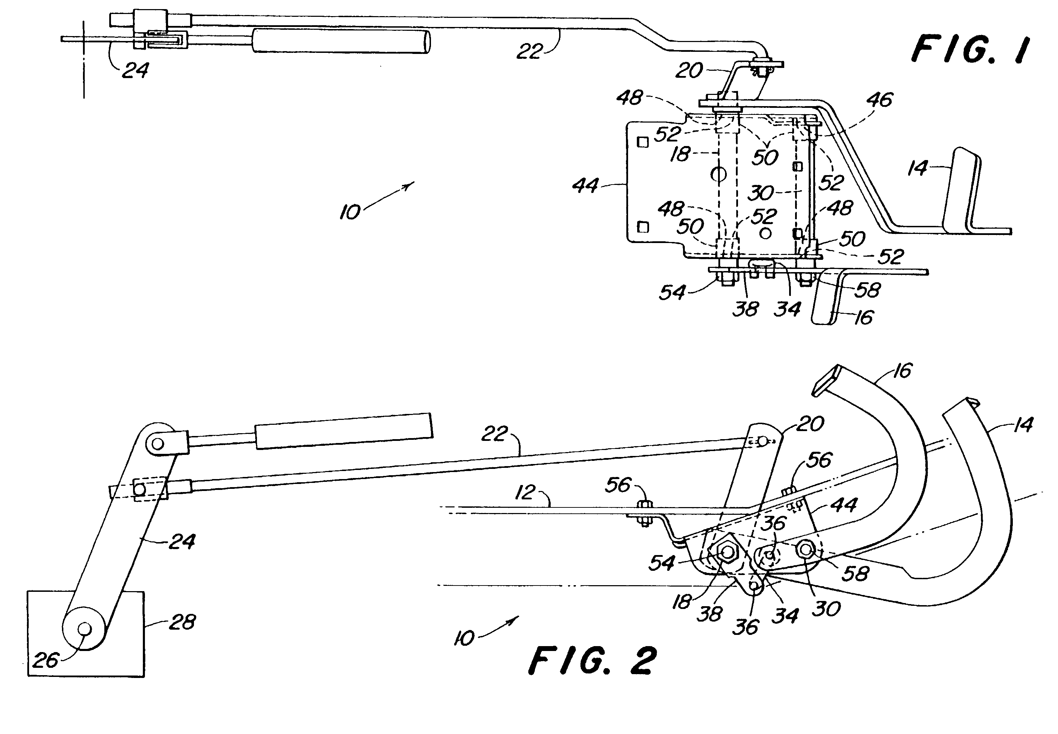

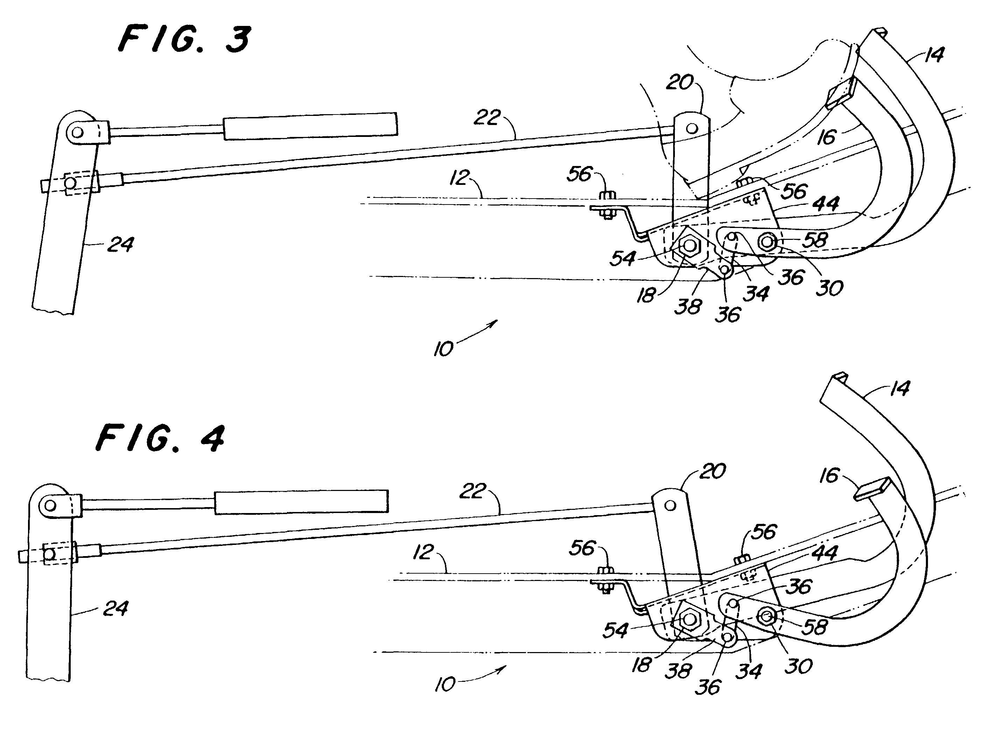

Im einzelnen ist das Pedal 14 für die Vorwärtsfahrt auf einer Primärwelle 18 fest angeordnet, kann mit der Primärwelle verschwenken und erstreckt sich durch einen Schlitz in der Fußaufstellfläche 12 nach oben. Mit dem Pedal 14 ist ferner noch ein Steuerarm 20 verbunden, der somit ebenfalls um die durch die Primärwelle 18 definierte Achse verschwenken kann. Eine Steuerstange 22 ist an dem Steuerarm 20 und an einem Getriebestellarm 24 angelenkt, der seinerseits mit der Eingangswelle 26 eines hydrostatischen Getriebes 28 verbunden ist. Tritt nun die Bedienungsperson das Pedal 14 für Vorwärtsfahrt aus seiner in Fig. 3 wiedergegebenen Neutralstellung herunter, dann drehen die Primärwelle 18 und der Steuerarm 20 mit, wodurch die Steuerstange 22 und der Getriebestellarm 24 nach rechts in die in Fig. 2 gezeigte Position verstellt werden. Hierdurch wurde das Getriebe in eine Drehrichtung für Vorwärtsfahrt verstellt. Wenn nun die Bedienungsperson das Pedal 14 noch weiter heruntertritt, dann wird die Drehzahl des Getriebes 28 erhöht.

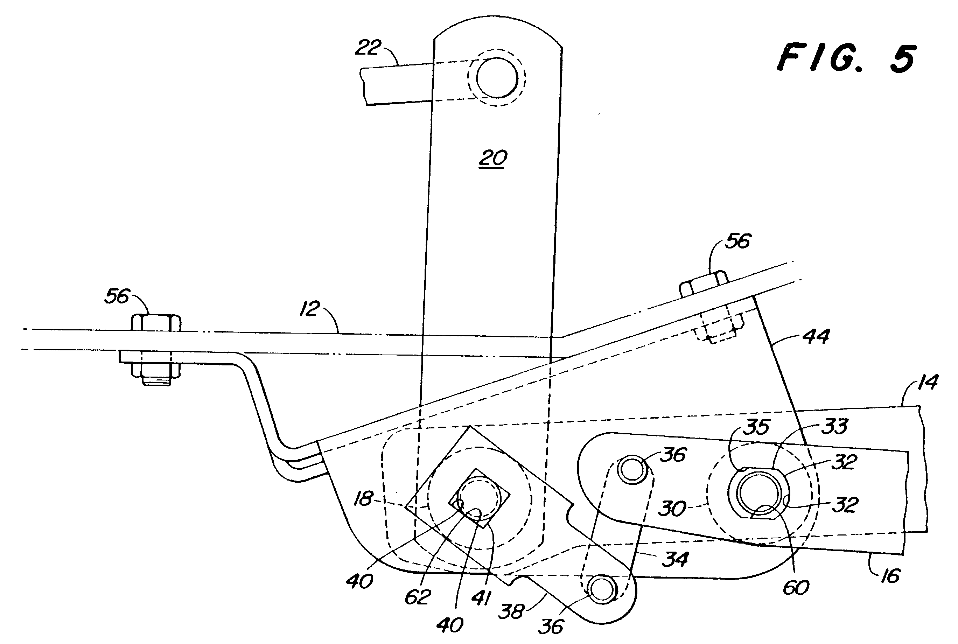

Das Gestänge 10 ist natürlich auch so ausgelegt, dass damit die Rückwärtsfahrt und auch die Rückwärtsgeschwindigkeit kontrolliert werden kann. Auch das Pedal 16 für Rückwärtsfahrt erstreckt sich durch einen Schlitz in der Fußaufstellfläche 12 nach oben, damit die Bedienungsperson es betätigen kann. Das Pedal 16 ist drehfest mit einer zweiten Welle 30 verbunden und kann mit dieser verschwenken. Dabei ist die zweite Welle 30 vor der Primärwelle 18 in einem bestimmten Abstand angeordnet. Zusammenpassende Flächen 32, die am besten aus Fig. 5 zu ersehen sind, haben abgeflachte Abschnitte, die an einer die zweite Welle aufnehmenden Bohrung im Pedal 14 und an der zweiten Welle 30 vorgesehen sind. Auf diese Weise ist das Pedal 16 mit der zweiten Welle 30 drehfest verbunden. Ein Hebel 34 ist noch zwischen zwei Bohrungen 36 angeordnet, von denen die eine in dem Pedal 16 und die andere in einem Arm 38 vorgesehen ist, der mit der Primärwelle 18 über zusammenpassende Flächen 40 und eine Mutter 54 verbunden ist. Wenn die Bedienungsperson nun das Pedal 16 für Rückwärtsfahrt heruntertritt, dann dreht sich die Welle 30 zusammen mit dem Pedal 16 in eine Stellung gemäß Fig. 4. Der Hebel 14 verstellt sich in Abhängigkeit von der Schwenkbewegung des Pedals 16 für Rückwärtsfahrt, wodurch der Arm 38, die Primärwelle 18 und die Steuerstange 22 sich entgegen dem Uhrzeigersinn aus ihrer Neutralstellung in eine Stellung nach Fig. 4 verstellen. Dabei wird der Getriebestellarm 24 in eine Stellung verstellt, in der das Getriebe 28 eine Drehrichtung für Rückwärtsfahrt einnimmt. Bei einem weiteren Heruntertreten des Pedals 16 wird die Rückwärtsgeschwindigkeit erhöht.

Die Primärwelle 18 und die zweite Welle 30 sind in einer Tragkonsole 44 schwenkbar angeordnet. Damit nimmt die Konsole 44 auch das Pedal 14 für Vorwärtsfahrt und das Pedal 16 für Rückwärtsfahrt auf, da beide Pedale mit den Wellen 18 oder 30 drehfest verbunden sind. Die Tragkonsole 44 ist mit der Unterseite der Fußaufstellfläche 12 verschraubt und kann als Bügelteil ausgebildet sein, um die beiden Wellen an seitlich auseinander liegenden Stellen derart aufnehmen zu können, dass während des Einsatzes auf sie einwirkende Kräfte sicher aufgefangen werden können. Die Tragkonsole 44 sollte derart angeordnet sein, dass sie unmittelbar unterhalb des Fußes der Bedienungsperson liegt. Damit ist die Primärwelle 18 und die zweite Welle 30 auch unmittelbar unterhalb des Fußes der Bedienungsperson angeordnet. Eine freitragende Anordnung im Rahmen des Fahrzeugs, was eine robuste und kostenaufwendige Aufhängung bedeuten würde, ist nicht erforderlich. Dadurch, dass die Tragkonsole unmittelbar unterhalb des Fußes der Bedienungsperson angebracht ist, sind die Pedale 14 und 16 durch eine einfache Vorrichtung, die kostengünstig herzustellen und zusammenzubauen ist, auch während des Einsatzes relativ stabil.

Der Hebel 34 ist an das Pedal 16 und an den Arm 38 schwenkbar angeschlossen, und zwar ohne Zuhilfenahme von Befestigungsmitteln. Der Hebel 34 ist nämlich als ein im wesentlichen U-förmiger Stangenteil ausgebildet, der in den Bohrungen 36 im Pedal 16 und im Arm 38 durch die Tragkonsole 44 gehalten wird. Die Tragkonsole 44 verhindert, dass der Hebel 34 aus den Bohrungen 36 austreten könnte, da er mit seiner Stegseite der Konsole zugelegen ist.

Auch der Zusammenbau des Gestänges 10 bzw. seine Montage ist äußerst einfach. Zunächst werden das Pedal 14 für Vorwärtsfahrt, die Steuerstange 22 und die Primärwelle 18 miteinander verschweißt. Danach werden Lager, beispielsweise in Form von Plastikhülsen 50 in entsprechende Öffnungen, die für die Aufnahme der Primärwelle 18 und der zweiten Welle 30 in der Tragkonsole 44 vorgesehen sind, eingesetzt. Anschließend wird die Primärwelle 18 in die entsprechenden Lager 50 eingesetzt. Nachfolgend wird der Arm 38 auf das eine Ende der Primärwelle aufgeschoben. Wenn dann die zusammenpassenden Flächen 40 gegeneinander anliegen, kann eine Mutter 54 zur Sicherung aufgeschraubt werden. Danach wird der Hebel 34 in die zugehörige Öffnung 36 im Arm 38 eingesetzt. Schließlich wird noch die zweite Welle 30 in die Lager 50 gesteckt. Nun kann die Tragkonsole 44 mit den bereits an sie angeschlossenen Teilen an der Unterseite der Fußaufstellfläche 12 über Schrauben 56 angebracht werden. Um allerdings die Tragkonsole mit der Fußaufstellfläche befestigen zu können, muss der Monteur zuvor das Pedal 14 für Vorwärtsfahrt nach oben durch einen Schlitz in der Fußaufstellfläche stecken. Durch einen weiteren Schlitz in der Fußaufstellfläche 12 wird danach das Pedal 16 für Rückwärtsfahrt von oben eingesetzt und auf die zweite Welle 30 geschoben. Anschließend wird der Hebel 34 mit seinem einen Schenkel in die entsprechende Öffnung im Pedal 16 geschoben. Wenn die zusammenpassenden Flächen 32 gegeneinander anliegen, kann das Pedal 16 durch eine auf die zweite Welle aufschraubbare Mutter 58 gesichert werden. Abschließend wird die an den Getriebestellarm 24 angelenkte Steuerstange 22 mit dem Steuerarm 20 verbunden, so dass auch die beiden Pedale für die Fahrtrichtung und Fahrgeschwindigkeit das Getriebe 28 entsprechend betätigen können.

Diese Montageuntergruppe kann separat vor der Endmontage zusammengebaut werden. Hierdurch ist eine einfache, schnelle und kostengünstige Montage möglich. Durch die zusammenpassenden Flächen kann auf Verschweißen verzichtet werden, was teuer ist und wodurch die Plastiklager beschädigt oder sogar schmelzen könnten. Die Plastikhülsen sind kostengünstig und können leicht eingesetzt werden. Durch den Einsatz der zusammenpassenden Flächen 32 und 40 und den der beiden Muttern 54 und 58 werden die Gesamtherstellungskosten reduziert.

Das Pedal 16 für Rückwärtsfahrt muss nicht notwendigerweise auf einer zweiten beiderseits in der Tragkonsole gelagerten Welle angeordnet sein. Eine Stummelwelle oder eine Buchse können bereits ausreichen.

## Patentansprüche

1. Fahrzeug mit einem ersten Pedal (14) für Vorwärtsfahrt und einem zweiten Pedal (16) für Rückwärtsfahrt, wobei eines der Pedale (14 oder 16) auf einer Primärwelle (18) fest angeordnet ist und wobei die Primärwelle (18) einen radial abstehenden Steuerarm (20) aufweist, der mit einer Getriebeschaltung in Verbindung steht, die bei einer Verstellung aus einer Ruhestellung in eine erste Richtung das Getriebe in eine Antriebsdrehrichtung für Vorwärtsfahrt und bei einer Verstellung aus der Ruhestellung in eine zweite Richtung das Getriebe in eine Antriebsdrehrichtung für Rückwärtsfahrt verstellt, wobei das andere Pedal (16 oder 14) auf einer zweiten zur Primärwelle (18) mit Abstand angeordneten Welle (30) fest angeordnet ist und beide Wellen (18, 30) in einer Tragkonsole (44) vorgesehen sind, die an dem Fahrzeug an der Stelle oder in deren unmittelbarer Nähe angebracht ist, an der die Pedale (14, 16) betätigt werden, **dadurch gekennzeichnet, daß** die Primärwelle (18) mit einem Arm (38) fest verbunden ist, wobei zwischen Arm (38) und dem Pedal (16) für Rückwärtsfahrt ein Hebel (34) schwenkbar angeschlossen ist.

2. Fahrzeug nach Anspruch 1, **dadurch gekennzeichnet, dass** die Tragkonsole (44) an einer Fußaufstellfläche (12) angebracht ist.

3. Fahrzeug nach Anspruch 1, **dadurch gekennzeichnet, dass** die Primärwelle (18) und/oder die zweite Welle (30) an mindestens zwei mit Abstand zueinander angeordneten Stellen in der Tragkonsole (44) gelagert ist bzw. sind.

4. Fahrzeug nach einem oder mehreren der vorherigen Ansprüche, **dadurch gekennzeichnet, dass** das Pedal (14) für Vorwärtsfahrt auf der Primärwelle (18) und das Pedal (16) für Rückwärtsfahrt auf der zweiten Welle (30) fest angeordnet ist.

5. Fahrzeug nach einem oder mehreren der vorherigen Ansprüche, **dadurch gekennzeichnet, dass** die Primärwelle (18) und/oder die zweite Welle (30) zumindest an einer Stelle derartig geformt sind, dass sie auf sie aufsteckbare Teile drehfest aufnehmen.

6. Fahrzeug nach einem oder mehreren der vorherigen Ansprüche, **dadurch gekennzeichnet, dass** der Hebel (34) durch Anlage gegen die Tragkonsole (44) in dem Pedal (16) für Rückwärtsfahrt und dem Arm (38) gehalten ist

7. Fahrzeug nach Anspruch 6, **dadurch gekennzeichnet, dass** der Hebel als U-förmiger Stangenteil ausgebildet ist.

8. Fahrzeug nach einem oder mehreren der vorherigen Ansprüche, **dadurch gekennzeichnet, dass** die Tragkonsole (44) zur drehbaren Aufnahme der Primärwelle (18) und der zweiten Welle (30) mit Lagern (50) versehen ist

## Claims

1. A vehicle with a first pedal (14) for forward travel and a second pedal (16) for reverse travel, wherein one of the pedals (14 or 16) is fixedly arranged on a primary shaft (18) and wherein the primary shaft (18) has a radially projecting control arm (20) which is coupled to a gear shift which shifts the gear into a drive direction of rotation for forward travel on movement out of a neutral position in a first direction and shifts the gear into a drive direction of rotation for reverse travel on movement out of the neutral position in a second direction, wherein the other pedal (16 or 14) is fixedly arranged on a second shaft (30) spaced from the primary shaft (18) and both shafts (18, 30) are provided in a supporting bracket (44) which is fitted on the vehicle at or in the immediate vicinity of the place at which the pedals (14, 16) are actuated, **characterized in that** the primary shaft (18) is fixedly connected to an arm (38) while a lever (34) is pivotally connected between the arm (38) and the pedal (16) for reverse travel.

2. A vehicle according to claim 1, **characterized in that** the supporting bracket (44) is fitted on a foot rest surface (12).

3. A vehicle according to claim 1, **characterized in that** the primary shaft (18) and/or the second shaft (30) is or are mounted at at least two places in the supporting bracket (44) spaced from one another.

4. A vehicle according to one or more of the preceding claims, **characterized in that** the pedal (14) for forward travel is fixedly arranged on the primary shaft (18) and the pedal (18) for reverse travel is fixedly arranged on the second shaft (30).

5. A vehicle according to one or more of the preceding claims, **characterized in that** the primary shaft (18) and/or the second shaft (30) are so shaped at at least one place that they receive in rotationally fast manner parts which can be slipped on to them.

6. A vehicle according to one or more of the preceding claims, **characterized in that** the lever (34) is held in the pedal (16) for reverse travel and the arm (38) by abutment against the supporting bracket (44).

7. A vehicle according to claim 6, **characterized in that** the lever is in the form of a U-shaped rod element.

8. A vehicle according to one or more of the preceding claims, **characterized in that** the supporting bracket (44) is provided with bearings (50) for rotary reception of the primary shaft (18) and the second shaft (30).

## Revendications

1. Véhicule comportant une première pédale (14) pour la marche avant, une deuxième pédale (16) pour la marche arrière, l'une des pédales (14 ou 16) étant montée de façon fixe sur un arbre primaire (18), et l'arbre primaire (18) possédant un bras de commande (20) qui fait saillie radialement et est relié à une unité de transmission, qui, lors d'un . réglage à partir d'une position de repos dans une première direction, règle la transmission dans un sens de rotation d'entraînement pour le déplacement vers l'avant et, lors d'un réglage depuis la position de repos dans une seconde direction, règle la transmission dans un sens de rotation d'entraînement pour la marche arrière, et dans lequel l'autre pédale (16 ou 14) est montée fixe sur un second arbre (30) situé à distance de l'arbre primaire (18) et les deux arbres (18, 30) sont prévus dans une console de support (44), qui est montée sur le véhicule à l'emplacement ou à proximité directe de l'emplacement, où les pédales (14, 16) sont actionnées, **caractérisé en ce que** l'arbre primaire (18) est relié de façon fixe à un bras (38), un levier (34) étant raccordé de manière à pouvoir pivoter entre le bras (38) et la pédale (16) pour la marche arrière.

2. Véhicule selon la revendication 1, **caractérisé en ce que** la console de support (44) est montée sur une surface (12) d'appui du pied.

3. Véhicule selon la revendication 1, **caractérisé en ce que** l'arbre primaire (18) et/ou le second arbre (30) est/sont monté(s) en au moins deux emplacements distants l'un de l'autre, dans la console de support (44).

4. Véhicule selon une ou plusieurs des revendications précédentes, **caractérisé en ce que** la pédale (14) pour la marche avant est montée fixé sur l'arbre primaire (18) et la pédale (16) pour la marche arrière est monté fixe sur le second arbre (30).

5. Véhicule selon une ou plusieurs des revendications précédentes, **caractérisé en ce que** l'arbre primaire (18) et/ou le second arbre (30) sont formés en au moins un emplacement de telle sorte qu'ils reçoivent solidairement en rotation des parties pouvant être enfichées sur ces arbres.

6. Véhicule selon une ou plusieurs des revendications précédentes, **caractérisé en ce que** le levier (34) est retenu par application contre la console de support (44) dans la pédale (16) pour la marche arrière et dans le bras (38).

7. Véhicule selon la revendication 6, **caractérisé en ce que** le levier est agencé sous la forme d'un élément de barre en forme de U.

8. Véhicule selon une ou plusieurs dès revendications précédentes, **caractérisé en ce que** la console de support (44) est pourvue de paliers (50) pour la réception, avec possibilité de rotation, de l'arbre primaire (18) et du second arbre (30).
